# EUROPEAN PATENT APPLICATION

(11) **EP 4 386 950 A1**
(43) Date of publication of application: **19.06.2024**
(21) Application number: 23178315.0
(22) Date of filing: 09.06.2023
(51) Int. Cl.: H01M 50/172, H01M 50/183, H01M 50/209, H01M 50/567, F16B 19/04, H01M 50/107, H01M 50/202

(54) **BATTERY PACK**

(30) Priority: 14.12.2022 CN 202223364489 U
(71) Applicant: CALB Group Co., Ltd., Changzhou City, Jiangsu Province (CN)
(72) Inventor: QI, Binwei, Changzhou City, Jiangsu Province (CN); SUN, Qianqian, Changzhou City, Jiangsu Province (CN); ZHANG, Lulu, Changzhou City, Jiangsu Province (CN)
(74) Representative: Becker, Eberhard

(57) **Abstract**

A battery pack is provided, the battery pack including: a battery box (10) and a battery (20) provided in the battery box (10), the battery (20) including: a battery housing (21); a pole (22) provided on the battery housing (21) and provided towards a bottom surface of the battery box (10); a riveted portion (221) being formed on the pole (22), and the riveted portion (221) being riveted with the battery housing (21). By forming the riveted portion on the pole, and riveting the riveted portion with the battery housing, the fixing strength of the battery housing and the pole can be improved, and the risk that the seal between the pole and the battery housing fails and the electrical connection of the battery fails when the pole is stressed can be avoided, thereby improving the safe use performance of the battery pack.

## Description

### BACKGROUND

### Technical Field

The present utility model relates to the technical field of batteries, and particularly relates to a battery pack.

### Description of Related Art

In the related art, when batteries are grouped, the batteries may be provided upside down, and when the batteries are upside down, the poles may be subjected to a large supporting force, so that there is a risk of connection failure of the poles.

### SUMMARY

The present utility model provides a battery pack so as to improve the use performance of the battery pack.

The utility model provides a battery pack, comprising: a battery box and a battery provided in the battery box, the battery comprising:
a battery housing;
a pole provided on the battery housing and provided towards a bottom surface of the battery box;
a riveted portion being formed on the pole, and the riveted portion being riveted with the battery housing.

The battery pack of the embodiments of the present utility model comprises a battery box and a battery provided in the battery box, the battery comprising a battery housing and a pole, the pole being provided on the battery housing and provided towards a bottom surface of the battery box, a riveted portion being formed on the pole, and the riveted portion being riveted with the battery housing, so that the fixing strength of the battery housing and the pole can be improved, and the risk that the seal between the pole and the battery housing fails and the electrical connection of the battery fails when the pole is stressed can be avoided, thereby improving the safe use performance of the battery pack.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views. In the drawings:
FIG. 1 is a structural schematic view of a battery pack according to an exemplary embodiment;
FIG. 2 is a structural schematic partial cross-sectional view of a battery according to an exemplary embodiment; and
FIG. 3 is a structural schematic partial cross-sectional view of a battery according to another exemplary embodiment.

Reference numerals are described below:
10, battery box; 20, battery; 21, battery housing; 22, pole; 221, riveted portion; 222, limiting portion; 223, first groove; 224, second groove; and 23, insulating member.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

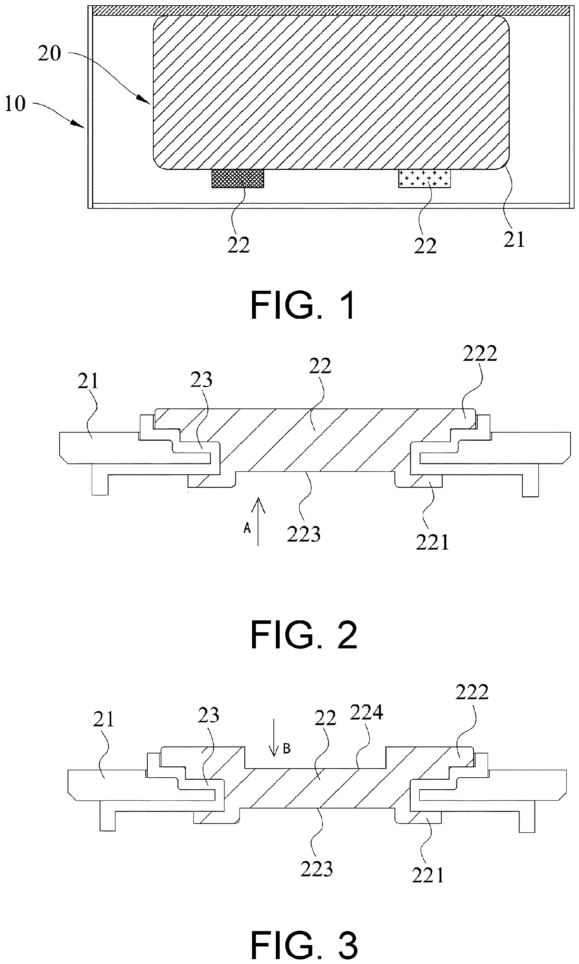

An embodiment of the present utility model provides a battery pack. With reference to FIGS. 1 to 3, the battery pack comprises a battery box 10 and a battery 20, wherein the battery 20 is provided in the battery box 10, and the battery 20 comprises: a battery housing 21; a pole 22, wherein the pole 22 is provided on the battery housing 21 and is provided towards a bottom surface of the battery box 10; a riveted portion 221 is formed on the pole 22, and the riveted portion 221 is riveted with the battery housing 21.

The battery pack of the embodiments of the present utility model comprises a battery box 10 and a battery 20 provided in the battery box 10, the battery 20 comprising a battery housing 21 and a pole 22, the pole 22 being provided on the battery housing 21 and provided towards a bottom surface of the battery box 10, a riveted portion 221 being formed on the pole 22, and the riveted portion 221 being riveted with the battery housing 21, so that the fixing strength of the battery housing 21 and the pole 22 can be improved, and the risk that the seal between the pole 22 and the battery housing 21 fails and the electrical connection of the battery fails when the pole 22 is stressed can be avoided, thereby improving the safe use performance of the battery pack.

It should be noted that since the pole 22 is provided on the battery housing 21 and is provided towards the bottom surface of the battery box 10, i.e. the battery is placed upside down in the battery box 10. Since the pole 22 will bear a large supporting force after the battery is inverted, and when the bottom of the battery box 10 is impacted, the pole 22 may have a stress problem, and therefore the pole 22 has a failure risk. By riveting the riveted portion 221 on the pole 22 with the battery housing 21, the fixed connection capability between the pole 22 and the battery housing 21 can be improved. Therefore, it is possible to avoid the risk of the internal seal and electrical connection of the battery failing due to the impact of the bottom of the battery box 10 or the stress exerted on the pole 22, thereby improving the safe use performance of the battery pack.

In one embodiment, the pole 22 may be riveted with the battery housing 21, for example, by pulling a rivet inside the pole 22 such that the pole 22 deforms to form the riveted portion 221, thereby allowing the riveted portion 221 to securely fixedly rivet with the battery housing 21.

In one embodiment, the riveted portion 221 is a flanging riveted portion to be fixedly riveted in a flanging manner with the battery housing 21, namely, the pole 22 can be deformed in a flanging manner so that a part of the pole 22 forms the riveted portion 221 so as to form a reliable limit contact with the battery housing 21, thereby ensuring a reliable fixing between the riveted portion 221 and the battery housing 21 and avoiding the risk of seal failure of the pole 22.

It should be noted that the flanging riveted portion may be considered to be a riveted portion 221 fixed to the battery housing 21 by deforming the pole 22. For example, one end of the pole 22 may be formed with a recess, and during the flanging process of the pole 22, the portion surrounding the recess is turned outwards, so that the riveted portion 221 may be formed, and the riveted portion 221 may reliably abut against the battery housing 21, thereby ensuring the stability of the connection between the pole 22 and the battery housing 21, thereby improving the safe use performance of the battery. The flanging riveted portion is formed by flanging an integrated pole 22 to form the riveted portion 221 as shown in FIGS. 2 and 3, which is simple in structure and flanging process, can effectively improve the manufacturing efficiency of the battery, and can also ensure the fixed connection of the pole 22 and the battery housing 21.

The riveted portion 221 is a flanging riveted portion, and compared with the riveting method in the related art, the flanging riveting achieves the simplicity of the pole. For example, compared with a pull riveting assembly, the flanging riveting requires the pole and the riveting aluminium block to cooperate together, and the pole of the flanging riveting is of an integral structure, avoiding a split pole resulting in a higher cost of the pole, and avoiding that a large contact interface resistance between the two leads to an overall pole heating seriously affecting the transmission rate of the battery.

In one embodiment, the riveted portion 221 is located on an inner side of the battery housing 21, and since the pole 22 is provided upside down, the bottom of the pole 22 is more easily subjected to a force. At this time, even if the bottom of the pole 22 is subjected to an impact force, since the riveted portion 221 is securely fixed and limited, the position change of the pole 22 relative to the battery housing 21 can be effectively avoided, so that the risk of a connection failure between the pole 22 and the battery housing 21 can be avoided, and the failure of an electrical connection between the pole 22 and other structures can also be avoided.

The riveted portion 221 is located on the inner side of the battery housing 21, i.e. the riveted portion 221 may form a limit contact with the inner surface of the battery housing 21, thereby ensuring a fixed connection between the pole 22 and the battery housing 21.

In some embodiments, it is not excluded that the riveted portion 221 is located on an outer side of the battery housing 21.

In one embodiment, as shown in FIGS. 2 and 3, a limiting portion 222 is further formed on the pole 22. The limiting portion 222 and the riveted portion 221 are respectively formed at two opposite ends of the pole 22, one of the limiting portion 222 and the riveted portion 221 is located on the inner side of the battery housing 21, and the other is located at the outer side of the battery housing 21, so as to clamp the battery housing 21, so that the battery housing 21 can be reliably fixed between the limiting portion 222 and the riveted portion 221, effectively avoiding the problem of a change in position between the pole 22 and the battery housing 21 due to a force, thereby ensuring the stability of the pole 22 and improving the safe use of the battery.

For example, as shown in FIGS. 2 and 3, the opposite ends of the pole 22 may form a limiting portion 222 and a riveted portion 221, the limiting portion 222 may be located on the outer side of the battery housing 21, and the riveted portion 221 may be located on an inner side of the battery housing 21. At this time, the battery housing 21 is sandwiched between the limiting portion 222 and the riveted portion 221, and even if the pole 22 is impacted by an external force, the pole 22 does not move in position due to the presence of the limiting portion 222 and the riveted portion 221, thereby effectively improving the safety performance of the battery.

Note that, in some embodiments, opposite ends of the pole 22 may form a limiting portion 222 and a riveted portion 221, the limiting portion 222 may be located on the inner side the battery housing 21, and the riveted portion 221 may be located on the outer side of the battery housing 21.

In one embodiment, an area enclosed by a circumferential outer edge of the limiting portion 222 is larger than an area enclosed by a circumferential outer edge of the riveted portion 221, so that the riveted portion 221, which is relatively small, can be formed more easily on the basis that the limiting portion 222 forms a reliable limit, thereby facilitating the formation of the pole 22 and improving the manufacturing efficiency of the battery.

The limiting portion 222 may be regarded as a limit structure formed during the molding of the pole 22, and the riveted portion 221 is formed by riveting the side, facing away from the limiting portion 222, of the pole 22 after the pole 22 is formed and after the pole 22 is mounted on the battery housing 21, thereby achieving a reliable fixation between the pole 22 and the battery housing 21.

For example, when the limiting portion 222 is located on the outer side of the battery housing 21, the limiting portion 222 can be used to be connected to the bus bar, and by making the area enclosed by the circumferential outer edge of the limiting portion 222 larger than the area enclosed by the circumferential outer edge of the riveted portion 221, it is possible to ensure a reliable flow area between the limiting portion 222 and the bus bar, thereby improving the safety performance of the battery.

Note that, in some embodiments, it is not excluded that the area enclosed by the circumferential outer edge of the limiting portion 222 may be smaller than the area enclosed by the circumferential outer edge of the riveted portion 221. Alternatively, it is not excluded that the area enclosed by the circumferential outer edge of the limiting portion 222 may be equal to the area enclosed by the circumferential outer edge of the riveted portion 221.

In one embodiment, as shown in FIGS. 2 and 3, the side, adjacent to the riveted portion 221, of the pole 22 is formed with a first groove 223, so that the operation can be facilitated in forming the riveted portion 221. For example, when the riveted portion 221 is formed by flanging riveting, the presence of the first groove 223 can ensure the forming of the riveted portion 221.

In one embodiment, a depth of the first groove 223 is greater than a thickness of the riveted portion 221 in a direction parallel to a center line of the first groove 223, i.e. in a depth direction of the first groove 223, thereby further facilitating the molding operation of the riveted portion 221 and improving the molding efficiency of the battery.

In the direction parallel to the center line of the first groove 223, the depth of the first groove 223 is greater than the thickness of the riveted portion 221, i.e. the riveted portion 221 is disposed around a portion of the first groove 223, and another portion of the first groove 223 penetrates into an interior of the pole 22, thereby not only facilitating the of the riveted portion 221, but also avoiding the problem of stress concentration during the forming of the riveted portion 221, thereby ensuring that the structure of the pole 22 is not damaged.

As shown in connection with FIG. 2, the depth direction of the first groove 223 may be denoted as A.

It is noted that in some embodiments, it is not excluded that the depth of the first groove 223 may be equal to the thickness of the riveted portion 221 in the direction parallel to the center line of the first groove 223.

In one embodiment, as shown in FIG. 2, a first groove 223 is formed on one side, near the riveted portion 221, of the pole 22, while the other side, near the limiting portion 222, of the pole 22 is generally planar, namely, the other side, near the limiting portion 222, of the pole 22 may not be provided with a recess or the like, so that the contact area between the bus bar and the pole 22 can be increased.

In one embodiment, as shown in FIG. 3, the other side, near the limiting portion 222, of the pole 22 is formed with a second groove 224, so that an overall weight of the pole 22 can be reduced, and an overall weight of the battery can be increased without excessive weight of the pole 22, thereby improving the energy density of the battery.

For example, when the limiting portion 222 is located on the outer side of the battery housing 21, the limiting portion 222 can be used the bus bar, and the second groove 224 can also be used as a positioning structure for connecting the limiting portion 222 with the bus bar, and a positioning connection can be formed with the second groove 224 by providing a protrusion on the bus bar.

In one embodiment, a depth of the second groove 224 in a direction parallel to the center line of the second groove 224, i.e. in a depth direction of the second groove 224, is not less than a thickness of the limiting portion 222, thereby enabling the second groove 224 to have a relatively large depth value, thereby reducing the weight of the pole 22.

As shown in connection with FIG. 3, the depth direction of the second groove 224 may be denoted as B.

Note that in some embodiments, it is not excluded that the depth of the second groove 224 may be less than the thickness of the limiting portion 222 in the direction parallel to the center line of the second groove 224.

In one embodiment, the depth of the first groove 223 is greater than the depth of the second groove 224, and on the basis of facilitating the formation of the riveted portion 221, it is also possible to avoid that the depth of the second groove 224 is too great to affect the structural strength of the pole 22 and thus the current capacity of the pole 22.

In one embodiment, the difference between the depth of the first groove 223 and the depth of the second groove 224 is not greater than a distance between a bottom wall of the first groove 223 and a bottom wall of the second groove 224, thereby ensuring that there is a certain wall thickness between the first groove 223 and the second groove 224, and avoiding the risk of breakdown of the portion between the first groove 223 and the second groove 224 during use of the pole 22, thereby ensuring safe use of the battery.

In one embodiment, the pole 22 is insulated from the battery housing 21, thereby allowing the pole 22 to act as the charging and discharging terminals of the battery.

The poles 22 may be two, and both of the poles 22 may be insulated from the battery housing 21 so that the two poles 22 are conveniently used as a positive pole and a negative pole.

Alternatively, the pole 22 may be one, the pole 22 is provided insulated from the battery housing 21, and the battery housing 21 and the pole 22 may be used as two charging and discharging terminals of the battery, respectively.

In one embodiment, an insulating coating is provided between the pole 22 and the battery housing 21, which not only has a simple structure, but also can reduce the weight of the battery, thereby increasing the energy density of the battery.

The insulating coating between the pole 22 and the battery housing 21 may be a ceramic material such as alumina (Al2O3), zirconia (ZrO2), etc.

In one embodiment, as shown in FIGS. 2 and 3, the battery further comprises an insulating member 23, wherein the insulating member 23 is provided between the pole 22 and the battery housing 21, and the riveted portion 221 is riveted with the battery housing 21 via the insulating member 23, namely, the riveted portion 221 can press against the insulating member 23, so that not only the insulating arrangement between the pole 22 and the battery housing 21 can be ensured, but also problems such as deformation of the battery housing 21 caused by the riveted portion 221 directly pressing the battery housing 21 can be avoided.

The insulating member 23 can achieve the insulation between the pole 22 and the battery housing 21, the insulating member 23 can be of an integral structure, namely, the insulating member 23 can simultaneously achieve the insulation sealing between the pole 22 and the battery housing 21, and the riveted portion 221 and the limiting portion 222 respectively press against the insulating member 23. For example, the insulating member 23 can be of an integrally formed plastic structure. Alternatively, the insulating member 23 can achieve the insulation between the pole 22 and the battery housing 21, and the insulating member 23 can be a plurality of split structures. For example, the insulating member 23 can comprise an upper plastic member, a sealing member and a lower plastic member, the sealing member achieves the insulation sealing between the pole 22 and the battery housing 21, and the riveted portion 221 and the limiting portion 222 press against the lower plastic member and the upper plastic member, respectively.

In one embodiment, the battery further includes an electrical core that is electrically connected to the pole so that charging and discharging of the battery is accomplished through the pole.

The same end of the electric core is led out with a first tab and a second tab with opposite polarities, and a direction of an extraction of the first tab and the second tab is perpendicular to the surface of the battery housing provided with a pole. The poles are two, and the first tab and the second tab are respectively connected to the two poles, namely, the two poles can be respectively provided towards the first tab and the second tab, so that the electrical connection between the first tab and the second tab and the two poles can be conveniently achieved, thereby improving the manufacturing efficiency of the battery.

The opposite ends of the electric core lead out a first tab and a second tab with opposite polarities, and the number of poles may be two, wherein the first tab and the second tab are respectively connected to the two poles.

Note that the battery includes a battery cell and an electrolyte, and a minimum unit capable of performing an electrochemical reaction such as charge/discharge. A cell refers to a unit formed by winding or laminating a stack including a first pole piece, a separator, and a second pole piece. When the first pole piece is a positive pole piece, the second pole piece is a negative pole piece. The polarities of the first pole piece and the second pole piece are interchangeable. The first pole piece and the second pole piece are coated with an active material.

In one embodiment, the battery 20 is a quadrangular prismatic battery.

The cells may be stacked cells, not only to facilitate grouping, but also to allow longer cell lengths to be fabricated. Specifically, the electric core is a laminated electric core, and the electric core has a first pole piece, a second pole piece electrically opposite to the first pole piece, and a diaphragm piece provided between the first pole piece and the second pole piece, which are stacked to form the laminated electric core.

Alternatively, the battery may be a wound battery, i.e. a first pole piece, a second pole piece electrically opposite to the first pole piece, and a diaphragm piece provided between the first pole piece and the second pole piece are wound to obtain a wound cell.

In one embodiment, the battery 20 may be a cylindrical battery. The battery may be a wound battery, i.e. a first pole piece, a second pole piece electrically opposite to the first pole piece and a diaphragm piece provided between the first pole piece and the second pole piece are wound to obtain a wound cell.

Note that the battery pack includes a plurality of batteries 20, and the plurality of batteries 20 are provided in the battery box 10. The plurality of batteries 20 may form a battery module and be mounted in the battery box 10. Alternatively, the plurality of batteries 20 may be provided directly in the battery box 10, i.e. without grouping the plurality of batteries 20, and the plurality of batteries 20 may be fixed by the battery box 10.

The battery box 10 can be a sealing structure, namely, the battery box 10 can comprise a bottom plate, a side frame and a top cover. Alternatively, the battery box 10 may include only a bottom plate and a side frame. For example, the battery pack is mounted on a vehicle, a floor of the vehicle may be used as a top cover of the battery box 10, or the battery pack is mounted on a container for storage, and in this case, an upper portion of the battery pack may have an open structure. Alternatively, the battery box 10 may include only a bottom plate. For example, a battery pack may be used in an energy storage device.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery pack, **characterized by** comprising: a battery box (10) and a battery (20) provided in the battery box (10), the battery (20) comprising:
a battery housing (21);
a pole (22) provided on the battery housing (21) and provided towards a bottom surface of the battery box (10);
a riveted portion (221) being formed on the pole (22), and the riveted portion (221) being riveted with the battery housing (21).

2. The battery pack according to claim 1, **characterized in that** the riveted portion (221) is a flanging riveted portion to be riveted fixedly in a flanging manner with the battery housing (21).

3. The battery pack according to claim 2, **characterized in that** the riveted portion (221) is located on an inner side of the battery housing (21).

4. The battery pack according to claim 2 or 3, **characterized in that** a limiting portion (222) is further formed on the pole (22), the limiting portion (222) and the riveted portion (221) are respectively formed at opposite ends of the pole (22), and one of the limiting portion (222) and the riveted portion (221) is located on the inner side of the battery housing (21) while the other is located on an outer side of the battery housing (21) to clamp the battery housing (21).

5. The battery pack according to claim 4, **characterized in that** an area enclosed by a circumferential outer edge of the limiting portion (222) is larger than an area enclosed by a circumferential outer edge of the riveted portion (221).

6. The battery pack according to claim 4, **characterized in that** a side, near the riveted portion (221), of the pole (22) is formed with a first groove (223) having a depth greater than a thickness of the riveted portion (221) in a depth direction of the first groove (223).

7. The battery pack according to claim 6, **characterized in that** the other side, near the limiting portion (222), of the pole (22) is formed with a second groove (224) having a depth not less than a thickness of the limiting portion (222) in a depth direction of the second groove (224).

8. The battery pack according to claim 7, **characterized in that** the depth of the first groove (223) is greater than the depth of the second groove (224).

9. The battery pack according to claim 8, **characterized in that** a difference between the depth of the first groove (223) and the depth of the second groove (224) is not greater than a distance between a bottom wall of the first groove (223) and a bottom wall of the second groove (224).

10. The battery pack according to any one of claims 1 to 9, **characterized in that** an insulating coating is provided between the pole (22) and the battery housing (21), or the battery (20) further comprises an insulating member (23) provided between the pole (22) and the battery housing (21), and the riveted portion (221) is riveted with the battery housing (21) through the insulating member (23).

11. The battery pack according to any one of claims 1 to 9, **characterized in that** the battery (20) is a quadrangular prism type battery.
